# FASCICULE DE BREVET EUROPEEN

(11) **EP 3 223 599 B1**
(45) Date de publication et mention de la délivrance du brevet: **15.01.2020**
(21) Numéro de dépôt: 15804877.7
(22) Date de dépôt: 03.11.2015
(51) Int. Cl.: A01G 3/037

(54) **OUTIL ÉLECTROPORTATIF À TRANSMISSION PROTÉGÉE**
HANDWERKZEUGMASCHINE MIT GESCHÜTZTEM GETRIEBE
HAND-HELD POWER TOOL WITH PROTECTED TRANSMISSION

(30) Priorité: 25.11.2014 FR 1461406
(43) Date de publication de la demande: 04.10.2017
(73) Titulaire: PELLENC, 84120 Pertuis (FR)
(72) Inventeur: PELLENC, Roger, 84120 Pertuis (FR)
(74) Mandataire: Weber, Etienne Nicolas
(86) Numéro de dépôt international: PCT/FR2015/052966
(87) Numéro de publication internationale: WO 2016/083696

(56) Documents cités:
- EP-A1- 2 682 238
- WO-A1-2013/011230
- WO-A1-2013/164310

## Description

### Domaine technique

La présente invention concerne un outil électroportatif, et en particulier un sécateur utilisable pour des travaux de taille et de récolte, notamment pour la taille de vignes et d'arbres fruitiers. De manière plus générale l'invention peut aussi trouver des applications à des outils comprenant un actionneur à déplacement linéaire avec un mécanisme de vis-écrou à billes. On entend par mécanisme de vis-écrou à billes un mécanisme capable de transformer avec un minimum de pertes énergétiques le mouvement de rotation d'un moteur, et en particulier d'un moteur électrique, en un mouvement de translation.

### Etat de la technique antérieure.

L'état de la technique est décrit en référence aux sécateurs électriques. Les problèmes techniques rencontrés dans l'état de la technique ne sont toutefois pas limités aux sécateurs et peuvent se rencontrer avec d'autres outils comparables tels que des cisailles à tôle, par exemple. Un sécateur typique est connu de EP 2 682 238 A1.

Les sécateurs électriques présentent une structure générale avec un moteur, un organe de coupe et une transmission reliant le moteur à l'organe de coupe. Le terme « transmission » désigne ici l'ensemble des pièces qui transmettent le mouvement du moteur à l'organe de coupe. La transmission peut comporter notamment un réducteur, monté sur l'arbre de sortie du moteur, et un mécanisme de vis-écrou à billes entraîné par le réducteur. Le mécanisme de vis-écrou à bille est formé d'une vis et d'un écrou qui coopèrent mutuellement par l'intermédiaire de billes circulant dans un chemin de billes. Le chemin de billes est formé par des filets complémentaires de l'écrou et de la vis. Le mouvement de rotation de la vis provoque ainsi une translation de l'écrou le long de la vis et parallèlement à l'axe de la vis. Le sens du déplacement de l'écrou est fonction du sens de rotation de la vis.

Le mouvement de translation de l'écrou est utilisé pour entraîner l'organe de coupe. Dans le cas d'un sécateur, l'organe de coupe comprend généralement une lame fixe et une lame mobile. La lame mobile est montée sur un pivot et peut ainsi pivoter entre une position ouverte et une position refermée sur la lame fixe. La transmission comporte à cet effet des biellettes qui relient la lame mobile à l'écrou du mécanisme de vis-écrou à billes évoqué ci-dessus.

Le moteur et la transmission sont logés dans un carter principal, qui, dans le cas des sécateurs, sert également de poignée. Or, comme le carter sert de poignée, le dimensionnement des parties internes, en particulier du moteur et de la transmission, doit être adapté, et de préférence réduit, de manière à garantir une préhension confortable de l'outil.

L'organe de coupe, et en particulier les lames sont montées à l'avant du carter principal. La lame fixe et le pivot de la lame mobile sont généralement vissés sur le carter principal.

La forme générale du carter au voisinage de l'organe de coupe est configurée pour protéger au mieux les organes internes du carter. Elle est configurée en particulier pour protéger la transmission, des poussières ou des débris générés par la coupe. Il est toutefois difficile d'ajuster exactement le carter principal sur les lames de l'organe de coupe pour ne pas entraver leur mouvement. Aussi, on constate que des débris, du sable ou des poussières viennent progressivement souiller les organes de la transmission. En particulier, des débris, du sable ou des poussières peuvent venir en contact avec le mécanisme de vis-écrou à billes et s'y agglomérer notamment avec le lubrifiant du mécanisme. Les débris, sable ou poussières de coupe risquent ainsi d'être entraînés dans le chemin de roulement des billes et de provoquer son usure rapide sinon le blocage du mécanisme de vis-écrou à billes. Un autre risque est de faire sauter les billes d'un système de recyclage de billes prévu dans l'écrou.

On connait par le document WO2013/164310 un sécateur pourvu d'un système de guidage avec une bague de guidage solidaire de l'écrou à vis. La bague de guidage coulisse à l'intérieur du corps de l'outil, qui est cylindrique, de manière à soulager la transmission des efforts latéraux. La bague de guidage est mise à profit pour nettoyer la surface interne du corps de l'outil. Une telle configuration permet de protéger, au moins en partie, la transmission des débris ou des poussières de coupe. Toutefois elle nécessite une conformation précise du corps de l'outil, c'est-à-dire du carter principal à la bague de guidage sur tout le trajet couvert par cette dernière.

### Exposé de l'invention

La présente invention a pour but de fournir de manière simple une protection absolue de la transmission des outils électroportatifs contre des débris et poussières de coupe.

Un autre but est de fournir une telle protection qui ne mette pas à contribution le corps de l'outil, et qui ne requiert pas de conformation particulière de son carter.

Un but est encore de proposer une telle protection susceptible d'être vérifiée et éprouvée avant l'assemblage de l'outil et en particulier avant le montage du sous-ensemble formé par le moteur et la transmission dans le carter de l'outil.

Aussi, l'invention propose un outil électroportatif comprenant, un moteur, un organe de coupe et une transmission reliant l'organe de coupe au moteur, le moteur et la transmission étant logés dans un carter principal, la transmission comprenant un mécanisme de vis-écrou à billes dans lequel l'un parmi la vis et l'écrou est solidaire en rotation du moteur, et l'autre de la vis et de l'écrou est relié à l'organe de coupe. Conformément à l'invention l'outil comprend également un carter de protection du mécanisme de vis écrou à billes, distinct du carter principal, et un joint d'étanchéité coulissant coopérant avec une face interne du carter de protection, le joint coulissant étant entraîné par l'un de l'écrou et de la vis relié à l'organe de coupe. Selon qu'il est entrainé par l'écrou, ou par la vis, le joint coulissant est solidaire respectivement de l'un parmi un manchon coiffant l'écrou et d'une chape de protection de la vis.

Le carter de protection, associé au joint coulissant, forme un espace clos et protège la vis des salissures éventuelles. Aussi l'étanchéité du joint s'entend comme une étanchéité par rapport à des salissures telles que des poussières, des débris de coupe, ou des grains de sable susceptibles de dégrader rapidement ou progressivement le fonctionnement du mécanisme de vis-écrou à billes. Le carter de protection protège également l'écrou, et le chemin de roulement des billes. Il peut présenter une section de préférence circulaire, ovale ou oblongue.

Le fait que le joint soit entraîné par la partie du mécanisme de vis-écrou à billes relié à l'organe de coupe, c'est-à-dire la partie se déplaçant en translation, permet au joint d'accompagner le mouvement sans rompre l'étanchéité.

Comme mentionné précédemment, le carter de protection est distinct du carter principal de l'outil. Cette caractéristique est avantageuse à plus d'un titre. Tout d'abord elle permet de conformer et de dimensionner le carter de protection de manière optimale par rapport au mécanisme de vis-écrou à billes, et en particulier par rapport au joint d'étanchéité. En effet, cette conformation peut se faire de manière indépendante de celle du carter principal c'est-à-dire du corps de l'outil. Cette mesure est particulièrement intéressante non seulement pour la réalisation du carter de protection mais aussi, et surtout, pour la réalisation du carter principal. La forme du carter principal, n'est pas assujettie à une éventuelle fonction de protection contre les poussières et peut être déterminée en fonction d'autres exigences, notamment lorsque le corps de l'outil sert de poignée de préhension. La forme du carter principal peut en particulier être conçue pour ménager une aération, un accès technique pour le nettoyage par soufflage, ou le passage de fils électriques, sans interférer avec la transmission. Le carter principal présente simplement des formes adaptées au support et au maintien du mécanisme de vis-écrou à billes. Ceci autorise sa réalisation par simple moulage, sans usinage ultérieur, pour recevoir le mécanisme et notamment le carter de protection.

Enfin, l'utilisation d'un carter de protection distinct du carter principal, permet de protéger la vis dès le montage d'un sous ensemble formé par le moteur et de la transmission et avant l'intégration de ce sous-ensemble dans le carter principal. Cette particularité permet notamment un contrôle fonctionnel de ce sous-ensemble avant assemblage dans le carter principal en limitant les risques d'incorporer des corps étrangers au niveau de la vis à billes à cette étape de la fabrication.

Le carter de protection peut être configuré pour être reçu de manière amovible dans le carter principal. Ceci permet de protéger la vis et l'écrou en cas de démontage de l'outil, par exemple lors d'une opération de maintenance ou de nettoyage.

Pour transformer le mouvement de rotation du moteur en un mouvement de translation, l'un de la vis et de l'écrou est relié au moteur, ou le cas échéant à un réducteur associé au moteur, et est entraîné en rotation. L'autre de la vis et de l'écrou, qui est alors animé d'un mouvement de translation est relié à l'organe de coupe.

Dans une mise en oeuvre particulière de l'invention la vis est entrainée en rotation par le moteur ou le réducteur et l'écrou est relié à l'organe de coupe. La vis peut être solidaire de l'arbre du moteur ou montée sur le réducteur. Dans ce cas, l'écrou, qui est relié à l'organe de coupe est pourvu du joint coulissant dans le carter de protection. Le joint est solidaire d'un manchon venant coiffer l'écrou. Le manchon peut s'étendre, par exemple, sur une face de l'écrou perpendiculaire à l'axe de la vis et tournée de préférence vers l'intérieur du carter de protection. Le manchon peut aussi s'étendre sur tout ou partie de la surface extérieure de l'écrou, parallèle à l'axe de la vis. Le joint est, par exemple, un joint à lèvre avec une lèvre rapportée sur le manchon ou formée d'une seule pièce avec le manchon.

Par ailleurs, et pour compléter la protection de la transmission et en particulier pour protéger une face de l'écrou à bille tournée à l'opposé du moteur, cette face peut être pourvue d'une douille de protection. La douille de protection permet de protéger une partie de la vis qui dépasse de l'écrou lorsque l'écrou se déplace le long de la vis. Elle permet également de protéger la face de l'écrou tournée à l'opposé du moteur et qui n'est pas entourée par le carter de protection. La douille évite ainsi la pénétration de débris ou de poussières dans le chemin de roulement des billes par cette face. La douille de protection est montée de manière rigide sur l'écrou et présente un diamètre de préférence ajusté à celui de la vis. Le diamètre peut être choisi légèrement supérieur à celui de la vis pour éviter tout frottement. Le montage rigide de la douille sur l'écrou permet de garantir la concentricité de la douille par rapport à la vis et donc de conserver un jeu réduit avec la vis sans générer de frottements.

La longueur de la douille de protection est de préférence adaptée à la longueur de la section de la vis susceptible de dépasser de l'écrou lorsque l'écrou se trouve en bout de course en direction du moteur.

La douille peut être conçue pour s'étendre en partie dans l'écrou de manière à protéger efficacement le chemin de roulement des billes. Tout comme le carter de protection, la douille peut être réalisée en métal, en matière plastique ou en un matériau composite.

La douille peut être pourvue d'au moins un évent. Un évent est particulièrement utile lorsque le diamètre de la douille est ajusté sur la vis. Il permet en effet d'éviter une surpression ou une dépression temporaire dans la douille suite à un déplacement rapide de l'écrou.

Des biellettes de la transmission ou un mécanisme équivalent relient l'écrou à l'organe de coupe. Elles sont de préférence ménagées de part et d'autre de la douille.

Dans un autre mode de mise en œuvre de l'invention, l'écrou est monté sur l'arbre du moteur ou sur la sortie du réducteur de manière à être entraîné en rotation. La vis, qui est alors mue d'un mouvement de translation, est reliée à l'organe de coupe par une ou plusieurs biellettes ou par un mécanisme équivalent. Dans ce cas, le joint coulissant est solidaire de la vis et de préférence d'une chape de protection de la vis pouvant coulisser entre l'écrou et le carter de protection. Le joint peut comporter une lèvre montée, par exemple, au voisinage d'une extrémité de la chape tournée vers le moteur. La lèvre peut aussi être formée d'une seule pièce avec la chape.

La chape de protection présente de préférence une section circulaire adaptée à l'écrou également circulaire. Elle est fixée à l'extrémité libre de la vis, c'est-à-dire l'extrémité reliée à l'organe de coupe. Les biellettes mentionnées précédemment peuvent être montées sur la chape ou directement sur la vis.

D'autres caractéristiques et avantages de l'invention ressortent de la description qui suit en référence aux dessins des figures. Cette description est donnée à titre d'illustration et non de limitation.

### Brève description des figures

La figure 1 est une coupe longitudinale d'un sécateur électrique conforme à l'invention, avec un organe de coupe en position ouverte.
La figure 2 est une coupe partie du sécateur de la figure 1, en position fermée de l'organe de coupe non représenté, selon un plan de coupe passant par la vis du mécanisme de vis-écrou à billes, et perpendiculaire au plan de coupe de la figure 1.
La figure 3 est une coupe longitudinale du sécateur de la figure 1 avec l'organe de coupe en position fermée.
La figure 4 est une coupe longitudinale d'un sécateur électrique conforme à l'invention selon une variante de mise en oeuvre de l'invention.

### Description détaillée de modes de mise en œuvre de l'invention

Dans la description qui suit des parties identiques ou similaires des différentes figures sont repérés avec les mêmes signes de référence de manière à pouvoir se reporter plus facilement d'une figure à l'autre.

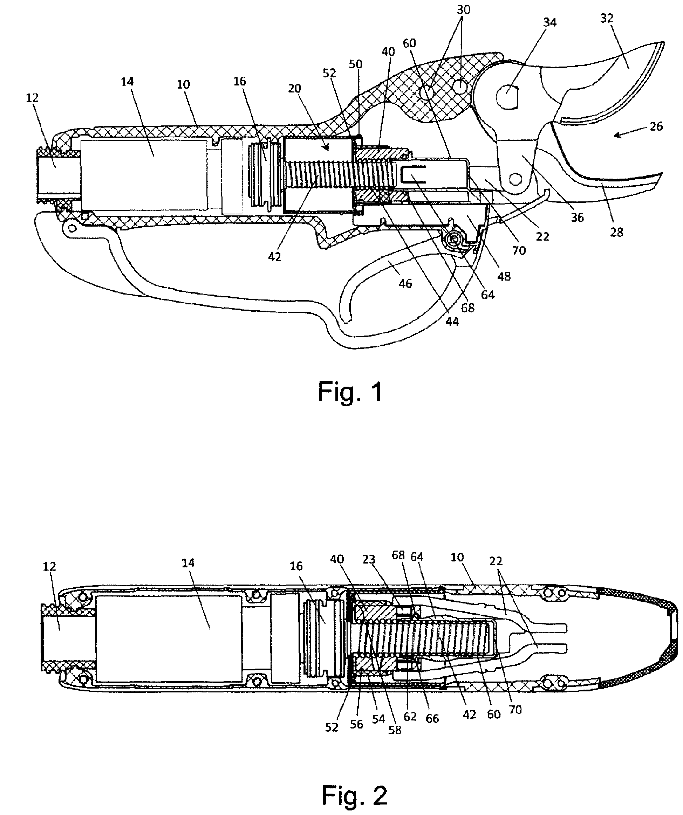

La figure 1 montre un outil électroportatif et plus précisément un sécateur conforme à l'invention. Il convient de préciser que le sécateur de la figure 1 est un sécateur électrique à alimentation électrique distante. L'alimentation électrique distante comprend une batterie d'accumulateurs que l'utilisateur peut porter à la ceinture ou au dos, et qui est reliée au sécateur par un cordon d'alimentation. Le cordon d'alimentation et la batterie d'alimentation n'apparaissent pas sur les figures dans un souci de simplification.

Le sécateur comprend un carter principal 10 dans lequel sont logés dans l'ordre, un connecteur 12 pour relier le sécateur à son alimentation, un moteur électrique rotatif 14, un réducteur 16, monté sur l'arbre du moteur, un mécanisme 20 de vis-écrou à billes, et des biellettes 22.

Les biellettes 22, le mécanisme 20 de vis-écrou à billes, et le réducteur font partie de la transmission du sécateur. La transmission est comprise en effet comme l'ensemble des organes qui communiquent le mouvement du moteur à l'organe de coupe 26.

L'organe de coupe 26 comprend une lame 28, fixe et rigidement fixée au carter au moyen de vis 30. Il comprend également une lame mobile 32, reliée au carter par l'intermédiaire d'un pivot 34. La lame mobile 32 est pourvue d'une came 36 reliée au mécanisme de vis-écrou à bille 20 par l'intermédiaire des biellettes 22. Une seule biellette est visible sur la figure 1.

Les biellettes 22 sont plus précisément reliées à un écrou 40 du mécanisme de vis-écrou à billes 20, par une articulation non visible sur la figure. L'écrou 40, présente un filet qui coopère avec un filet correspondant d'une vis 42 par l'intermédiaire de billes. Les filets de l'écrou 40 et de la vis 42 constituent un chemin de roulement 44 pour les billes qui transmettent les efforts du mouvement de la vis vers l'écrou. Les billes ne sont pas représentées sur la figure. Elles sont maintenues à l'intérieur de la vis par un système de recirculation connu en soi.

La vis 42 est solidaire en rotation du réducteur 16 et donc du moteur 14. La rotation de la vis 42 entraine le déplacement de l'écrou 40 le long de la vis, parallèlement à son axe, dans un mouvement de translation. La rotation de la vis déplace l'écrou d'une première position extrême voisine du réducteur, vers une deuxième position extrême, à l'extrémité libre de la vis. Le sens du mouvement de l'écrou entre ces deux positions extrêmes dépend du sens de rotation de la vis, et donc du moteur.

Le mouvement de l'écrou 40, de sa première position extrême vers sa deuxième position extrême, fait pivoter la lame mobile 32 de sa position fermée vers une position ouverte. La position ouverte est celle représentée sur la figure 1. La commande du déplacement de la lame mobile entre les positions ouverte et fermée a lieu au moyen d'une gâchette 46, et d'une carte électronique de commande 48.

Le mouvement de la lame et la coupe de végétaux, provoque des débris et des poussières, qui, en dépit d'une configuration ajustée du carter au voisinage de l'organe de coupe, finissent par s'accumuler dans un logement interne du carter 10 autour des organes de la transmission, et notamment autour du mécanisme de vis écrou à billes.

Pour éviter que les débris et poussières ne viennent entraver le mouvement du mécanisme de vis-écrou à billes, le sécateur de la figure 1 comprend notamment un carter de protection 50. Celui-ci entoure la vis 42 le long de tout ou partie de la course de l'écrou 40. Le carter de protection est de préférence cylindrique. Il est dimensionné de manière à pouvoir recevoir l'écrou notamment lors de sa course en direction du réducteur.

Un joint coulissant 52 de l'écrou 40, avec une lèvre d'étanchéité, coopère avec la face interne du carter de protection 50 de manière qu'aucune poussière ou impureté ne puisse atteindre la partie de la vis située à l'intérieur du carter de protection. Le carter de protection, associé à la lèvre, protège également la face interne de l'écrou 40, c'est-à-dire la face tournée vers le moteur. Ces mesures mettent également la partie du chemin de roulement 44 des billes débouchant à l'intérieur du carter de protection à l'abri des salissures.

Lorsque l'écrou se déplace en direction du réducteur 16, c'est-à-dire vers sa première position extrême, une partie de la vis 42 dépasse de la face externe de l'écrou, c'est-à-dire la face tournée vers l'outil de coupe 26. Pour protéger également la vis 42 dans cette position de l'écrou, de même que la face externe de l'écrou, ce dernier est pourvu d'une douille de protection 60. La douille de protection a, comme le carter de protection, une fonction de préservation de la vis et de l'écrou des débris et des poussières de coupe.

La douille de protection 60, mieux visible sur la figure 2, comprend un manchon 62 qui s'insère en partie dans l'écrou 40. Le manchon est maintenu sur l'écrou par des pattes 66 montées sur des lames flexibles 64 de la douille 60. Les pattes viennent en prise dans une gorge interne 68 de l'écrou.

On peut observer sur la figure 2 que le diamètre de la douille de protection 60 est ajusté au diamètre de la vis 42. Un léger jeu peut être préservé de manière à éviter un frottement de la vis dans la douille. Le frottement est également évité en raison d'une fixation rigide de la douille sur l'écrou, qui maintient la douille concentrique à la vis. La fixation rigide est assurée par le manchon 62 notamment.

La douille de protection 60 est pourvue en son extrémité d'un évent 70. L'évent permet d'éviter un phénomène de compression ou de dépression dans la douille lors du déplacement de l'écrou, notamment en raison du caractère ajusté sur le diamètre de la vis 42.

La figure 2 montre également que la lèvre du joint 52 de l'écrou 40 est solidaire d'un manchon 54 qui coiffe l'extrémité de l'écrou du côté de sa face interne. Dans l'exemple illustré, le manchon est maintenu sur l'écrou au moyen d'une nervure 56 en prise dans une gorge 58 de l'écrou. La lèvre 52 peut être réalisée d'une seule pièce avec le manchon, ou rapportée sur le manchon, comme le montre la figure. La lèvre et le manchon sont préférentiellement réalisés en matière plastique élastique, par exemple un polymère. Lors du déplacement de l'écrou 40, la lèvre du joint 52 racle la face interne du carter de protection 50 de manière à la laisser exempte de poussières.

La positon de l'écrou 40 montrée à la figure 2 correspond à la lame mobile en position fermée. On peut observer que, dans cette position extrême, l'écrou est entièrement reçu dans le carter de protection. On peut aussi observer que les biellettes 22 qui relient l'écrou à la lame mobile, non représentée sur la figure 2, sont conçues pour ménager un passage pour la douille 60. Les biellettes sont reliées à l'écrou 40 par l'intermédiaire de goujons 23.

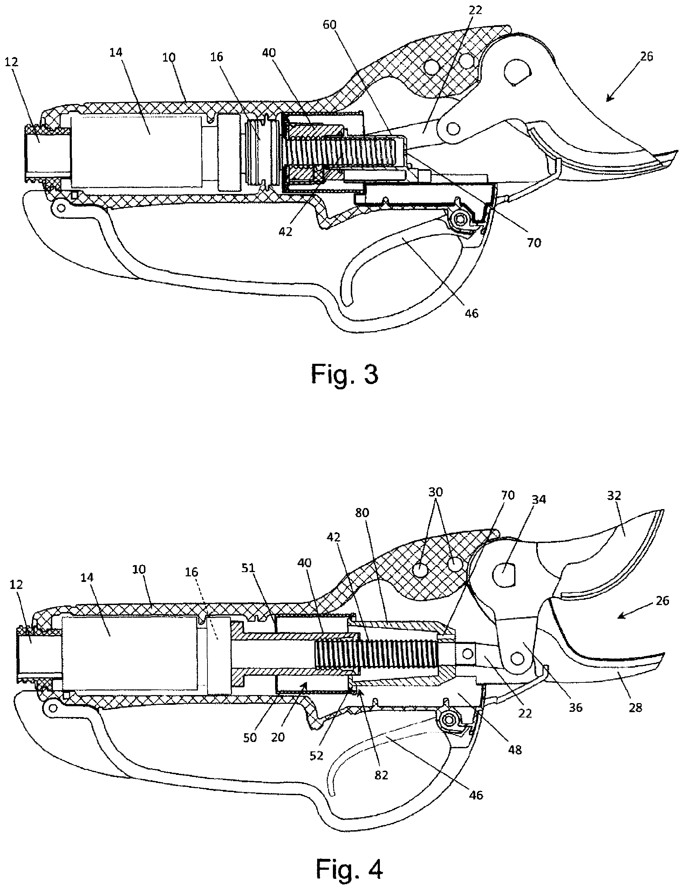

La figure 3, comparable à la figure 1 décrite ci-dessus, montre le sécateur avec la lame dans une position fermée. L'écrou 40 se trouve dans sa position extrême au fond du carter de protection, voisin du réducteur 16, et la vis 42 s'étend à l'intérieur de la douille 60. La longueur de la douille est adaptée à la partie de la vis qui dépasse de l'écrou dans cette position.

La figure 4 montre une autre possibilité de mise en œuvre de l'invention dans laquelle l'écrou 40 est directement monté en rotation sur le réducteur 16 et entraîné en rotation par le réducteur. La vis 42, qui n'est pas en prise avec le moteur ou le réducteur, ne tourne pas. Elle est simplement entrainée en translation sous l'effet de la rotation de l'écrou. L'extrémité de la vis est reliée par des biellettes 22 à la came 36 de la lame mobile 32. Une chape 80, cylindrique, fixée également à l'extrémité de la vis 42 entoure la vis et vient se prolonger jusque dans le carter de protection 50 . Une extrémité 82 de la chape est pourvue d'un joint d'étanchéité 52, sous la forme d'une lèvre, qui vient en contact avec la face interne du carter de protection 50. Le diamètre intérieur de la chape peut être ajusté au diamètre extérieur de l'écrou 40, notamment lorsque l'écrou est également cylindrique. Toutefois, et de préférence, un jeu suffisant est laissé entre la chape 80 et le corps de l'écrou 40 de manière à éviter des frottements.

Une extrémité du carter de protection 50 tournée vers le moteur peut être fermée par une paroi fixe 51. La paroi présente un passage pour l'écrou 40 et ménage un jeu suffisant pour éviter un frottement du carter sur l'écrou en rotation. Un joint tournant peut éventuellement être prévu entre la paroi fixe 51 du carter et l'écrou. Toutefois l'utilité d'un tel joint est réduite dans la mesure où le carter de protection est reçu dans le carter principal et que la paroi fixe 51 n'est pas exposée aux débris susceptibles de venir de l'organe de coupe 26.

Dans l'exemple de la figure le sécateur est représenté avec la lame pivotante 32 en position ouverte. La vis 42 occupe une position extrémale, dans laquelle elle s'étend principalement hors de l'écrou. Le joint 52 se trouve alors au voisinage d'une extrémité du carter de protection 50 tournée vers l'organe de coupe 26. A l'inverse, lorsque la lame pivotante 32 vient se fermer sur la lame fixe 28, la chape 80 et le joint 52 se rapprochent de la paroi fixe 51 du fond du carter 50.

La chape 80 peut comporter en son extrémité un évent 70. L'évent permet d'éviter un phénomène de compression ou de dépression dans la douille lors du déplacement de la vis 42.

## Revendications

1. Outil électroportatif comprenant, un moteur (14), un organe de coupe (26) et une transmission (16, 20,22) reliant l'organe de coupe au moteur, le moteur et la transmission étant logés dans un carter principal (10), la transmission comprenant un mécanisme de vis-écrou à billes (20) avec une vis (42) et un écrou (40), l'un parmi la vis et l'écrou étant solidaire en rotation du moteur, et l'autre de la vis et de l'écrou étant relié à l'organe de coupe, **caractérisé par** un carter de protection (50) du mécanisme de vis écrou à billes, distinct du carter principal, et par un joint coulissant (52) coopérant avec une face interne du carter de protection (50), le joint coulissant étant entraîné par l'un de l'écrou (40) et de la vis (42) relié à l'organe de coupe, le joint coulissant (52) étant solidaire respectivement de l'un parmi un manchon (54) coiffant l'écrou et d'une chape (80) de protection de la vis (42).

2. Outil électroportatif selon la revendication 1 dans lequel la vis (42) est solidaire en rotation du moteur (14) et dans lequel le joint coulissant est formé sur le manchon coiffant l'écrou.

3. Outil électroportatif selon l'une des revendications précédentes dans lequel la vis (42) est solidaire en rotation du moteur (14) et comprenant en outre une douille (60) de protection de la vis, rigidement montée sur une face de l'écrou opposée au moteur.

4. Outil électroportatif selon la revendication 3, dans lequel la douille (60) s'étend en partie dans l'écrou.

5. Outil électroportatif selon la revendication 3, dans lequel la douille (60) est pourvue d'un évent (70).

6. Outil électroportatif selon la revendication 1, dans lequel l'écrou (40) est solidaire en rotation du moteur et dans lequel le joint (52) est solidaire de la chape (80) de protection de la vis, la chape de protection pouvant coulisser entre l'écrou et le carter de protection.

7. Outil électroportatif selon la revendication 6, dans lequel la chape (80) est reliée à une extrémité de la vis tournée vers l'organe de coupe.

8. Outil électroportatif selon l'une quelconque des revendications précédentes dans lequel le joint (52) est un joint à lèvre.

9. Outil électroportatif selon l'une quelconque des revendications précédentes dans lequel le carter de protection (50) présente une section choisie parmi une section cylindrique, une section ovale et une section oblongue.

10. Outil électroportatif selon l'une des revendications précédentes, dans lequel la transmission comporte un réducteur (16) monté sur un arbre du moteur, l'un de la vis et de l'écrou étant respectivement monté sur le réducteur.

11. Outil électroportatif selon la revendication 10, dans lequel le carter de protection est monté sur le réducteur (16).

12. Outil électroportatif selon l'une des revendications précédentes, dans lequel le carter de protection (50) est reçu de manière amovible dans le carter principal (10).

13. Outil électroportatif selon l'une quelconque des revendications précédentes, comprenant des biellettes (22) reliant l'un de l'écrou et de la vis à une came d'une lame mobile de l'organe de coupe (26).

14. Outil électroportatif selon l'une quelconque des revendications précédentes, **caractérisé en ce que** l'outil est un sécateur.

## Patentansprüche

1. Handwerkzeugmaschine, umfassend einen Motor (14), ein Schneidelement (26) und ein Getriebe (16, 20, 22), welches das Schneidelement mit dem Motor verbindet, wobei der Motor und das Getriebe in einem Hauptgehäuse (10) untergebracht sind, das Getriebe einen Kugelgewindemechanismus (20) mit einer Schraube (42) und einer Mutter (40) umfasst, eine von der Schraube und der Mutter drehfest mit dem Motor verbunden ist und die andere von der Schraube und der Mutter mit dem Schneidelement verbunden ist, **gekennzeichnet durch** ein Schutzgehäuse (50) des Kugelgewindemechanismus, das sich von dem Hauptgehäuse unterscheidet, und durch eine Gleitdichtung (52), die mit einer Innenseite des Schutzgehäuses (50) zusammenwirkt, wobei die Gleitdichtung durch eine von der Mutter (40) und der Schraube (42), die mit dem Schneidelement verbunden ist, verschoben wird, wobei die Gleitdichtung (52) jeweils fest mit einer von einer die Mutter bedeckenden Hülse (54) und einer Kappe (80) zum Schutz der Schraube (42) verbunden ist.

2. Handwerkzeugmaschine nach Anspruch 1, wobei die Schraube (42) drehfest mit dem Motor (14) verbunden ist und wobei die Gleitdichtung auf der die Mutter abdeckenden Hülse ausgebildet ist.

3. Handwerkzeugmaschine nach einem der vorhergehenden Ansprüche, wobei die Schraube (42) drehfest mit dem Motor (14) verbunden ist und ferner eine Fassung (60) zum Schutz der Schraube umfasst, die fest auf einer Seite der Mutter gegenüber dem Motor angebracht ist.

4. Handwerkzeugmaschine nach Anspruch 3, wobei sich die Fassung (60) teilweise in die Mutter erstreckt.

5. Handwerkzeugmaschine nach Anspruch 3, wobei die Fassung (60) mit einer Entlüftungsöffnung (70) versehen ist.

6. Handwerkzeugmaschine nach Anspruch 1, wobei die Mutter (40) drehfest mit dem Motor verbunden ist und wobei die Dichtung (52) fest mit der Kappe (80) zum Schutz der Schraube verbunden ist, wobei die Schutzkappe zwischen der Mutter und dem Schutzgehäuse verschoben werden kann.

7. Handwerkzeugmaschine nach Anspruch 6, wobei die Kappe (80) mit einem Ende der Schraube verbunden ist, das dem Schneidelement zugewandt ist.

8. Handwerkzeugmaschine nach einem der vorhergehenden Ansprüche, wobei die Dichtung (52) eine Lippendichtung ist.

9. Handwerkzeugmaschine nach einem der vorhergehenden Ansprüche, wobei das Schutzgehäuse (50) einen Querschnitt aufweist, der ausgewählt ist aus einem zylindrischen Querschnitt, einem ovalen Querschnitt und einem länglichen Querschnitt.

10. Handwerkzeugmaschine nach einem der vorhergehenden Ansprüche, wobei das Getriebe ein Untersetzungsgetriebe (16) umfasst, das auf einer Motorwelle angebracht ist, wobei eine von der Schraube und der Mutter jeweils an dem Untersetzungsgetriebe angebracht ist.

11. Handwerkzeugmaschine nach Anspruch 10, wobei das Schutzgehäuse auf dem Untersetzungsgetriebe (16) angebracht ist.

12. Handwerkzeugmaschine nach einem der vorhergehenden Ansprüche, wobei das Schutzgehäuse (50) entfernbar in dem Hauptgehäuse (10) aufgenommen ist.

13. Handwerkzeugmaschine nach einem der vorhergehenden Ansprüche, umfassend ein Gestänge (22), das eine von der Mutter und der Schraube mit einem Nocken einer beweglichen Klinge des Schneidelements (26) verbindet.

14. Handwerkzeugmaschine nach einem der vorhergehenden Ansprüche, **dadurch gekennzeichnet, dass** es sich bei dem Werkzeug um eine Gartenschere handelt.

## Claims

1. A hand-held power tool comprising a motor (14), a cutting member (26) and a transmission (16, 20, 22) connecting the cutting member to the motor, the motor and the transmission being housed in a main casing (10), the transmission comprising a screw-nut mechanism with balls (20) having a screw (42) and a nut (40), one of the screw and the nut being non-rotatably fixed to the motor (14), and the other of the screw (42) and the nut (40) being connected to the cutting member, **characterised by** a protective casing (50) for the ball screw-nut mechanism, that is separate from the main casing, and by a sliding seal (52) cooperating with an internal face of the protective casing (50), the sliding seal being entrained by one of the nut (40) and the screw (42) connected to the cutting member (26), the sliding seal (52) being respectively fixed with respect to one of a cover (54) fitting over the nut and a protective cap (80) for the screw (42).

2. A hand-held power tool according to claim 1 wherein the screw (42) is non-rotatably fixed with respect to the motor (14) and wherein the sliding seal is formed on the cover fitting over the nut (40).

3. A hand-held power tool according to one of the preceding claims wherein the screw (42) is non-rotatably fixed with respect to the motor (14) and further comprising a protective sleeve (60) for the screw (42), that is rigidly mounted on a face of the nut (40) opposite to the motor.

4. A hand-held power tool according to claim 3 wherein the sleeve (60) extends partially into the nut (40).

5. A hand-held power tool according to claim 3 wherein the sleeve (60) is provided with a vent (70).

6. A hand-held power tool according to claim 1 wherein the nut (40) is non-rotatably fixed with respect to the motor (14) and wherein the seal (52) is fixed with respect to the protective cap (80) of the screw (42), the protective cap being capable of sliding between the nut and the protective casing.

7. A hand-held power tool according to claim 6 wherein the cap (80) is connected to an end of the screw, that is towards the cutting member.

8. A hand-held power tool according to claim 1 wherein the seal (52) is a lip seal.

9. A hand-held power tool according to any one of the preceding claims wherein the protective casing (50) is of a cross section selected from cylindrical, oval and oblong.

10. A hand-held power tool according to one of the preceding claims wherein the transmission includes a reducing gear (16) mounted on a shaft of the motor, one of the screw and the nut being respectively mounted on the reducing gear.

11. A hand-held power tool according to claim 10 wherein the protective casing is mounted on the reducing gear (16).

12. A hand-held power tool according to one of the preceding claims wherein the protective casing (50) is removably received in the main casing (10).

13. A hand-held power tool according to any one of the preceding claims comprising connecting rods (22) connecting one of the nut (40) and the screw (42) to a cam of a movable blade of the cutting member (26).

14. A hand-held power tool according to any one of the preceding claims **characterised in that** the tool is a pruning shears.
